# EUROPEAN PATENT SPECIFICATION

(11) **EP 4 168 169 B1**
(45) Date of publication and mention of the grant of the patent: **05.11.2025**
(21) Application number: 20941269.1
(22) Date of filing: 19.06.2020
(51) Int. Cl.: B01F 25/421, B01F 27/808, B01F 27/81, B01F 33/82, B01J 4/00

(54) **LIQUID POLYMER OR CHEMICAL ACTIVATION SYSTEM USING A SUBMERSIBLE ACTUATOR**
SYSTEM ZUR AKTIVIERUNG VON FLÜSSIGEM POLYMER ODER VON CHEMIKALIEN MIT EINEM TAUCHFÄHIGEN AKTUATOR
POLYMÈRE LIQUIDE OU SYSTÈME D'ACTIVATION CHIMIQUE UTILISANT UN ACTIONNEUR SUBMERSIBLE

(43) Date of publication of application: 26.04.2023
(73) Proprietor: Mercado Alvarado, Adalberto, Bayamon, 00961 (PR)
(72) Inventor: Mercado Alvarado, Adalberto, Bayamon, 00961 (PR)
(74) Representative: Balder IP Law, S.L.
(86) International application number: PCT/US2020/038823
(87) International publication number: WO 2021/257101

(56) References cited:
- US-A- 5 164 429
- US-A- 5 505 541
- US-A1- 2002 056 678
- US-A1- 2010 187 191
- US-A1- 2019 118 148

## Description

### BACKGROUND OF THE INVENTION

### Field of the Invention

The present invention relates to a submersible mechanical blending mechanism, and more particularly relates to a structure built into a chamber including a polymer/chemical dilution and boosting system mechanically driven by a submersible motor.

### Discussion of the Background

Generally, mechanical blending systems are used in the separation of liquids from solids (and vice versa) on water treatment plants, waste-water treatment plants, pharmaceutical plants, food and beverage plants, diary, distillery, power plants, industrial plants and mining processing facilities.

Further, standard mechanical and non-mechanical blending systems are used as ancillary equipment of liquid/solid separation technologies and play an essential role in sludge dewatering industries. In fact, the separation in sludge dewatering industries will not take place without a polymer blending system. For example, the polymer blending system are used with the following sludge dewatering equipment:
Decanters
High speed centrifuges
Belt filter presses
Gravity Belt thickeners
Rotary Drum thickeners
Plate presses
Screw Presses
Primary and secondary thickeners
Market snapshot

Standard mechanical and non-mechanical polymer blending systems use a single energy reaction chamber for dilution and activation of polymer. All of them depend on high inlet water pressure to get or maintain a constant blend if the inlet pressure is low; then the constant blend turns into variable blend. All variable blend the operator will follow two things that will increase consumption costs:
- Increase polymer dosing pump capacity
- Decrease production to maintain process stability

Currently standard mechanical polymer blending systems comprises external motor, water inlet, polymer inlet, mixing device, mixing chamber reaction and blend outlet. The minimum inlet pressure is 30-50 PSI (1 PSI = 6894.7572932 Pa) wherein with a low water inlet pressure a poor blend is achieved.

The non-mechanical polymer blending systems comprises a water inlet, polymer inlet, mixing chamber reactor, static mixing device and blend outlet. The minimum inlet pressure is 60 PSI wherein with a low water inlet pressure a worst blend is achieved compared to the mechanical polymer blending system.

For instance, US2019118148 Al provides a blending mechanism comprising: a housing including a first flange a second flange and a cover, wherein said first flange comprises an inlet and said second flange comprises an outlet; wherein said first flange, said second flange and said cover creates a chamber; a submersible actuator; a mixer; a impeller; at least a first retention mechanism; and wherein said submersible actuator, said mixer, said impeller and said first retention are inside said chamber.

Therefore, there is a need for a mechanical blending system that provides a correct and constant blend if the inlet water feed pressure is under 35 PSI and 60 PSI for non-mechanical blender.

### SUMMARY OF THE INVENTION

In light of the above shortcomings of the structures available to provide a liquid polymer or chemical activation system, the present disclosure provides a mechanical blending system comprising a polymer dilution/activation technology with a submersible motor inside of a reaction chamber according to claim 1.

In particular, the present disclosure relates to a liquid polymer or chemical activation system, comprising: a chamber having a top chamber flange on a first distal end and a bottom chamber flange on a second distal end, wherein each distal end is opposite to each other; a top cover plate, secured to the top chamber flange on the first distal end of the hollow chamber via one or more bolts; a middle cover plate and a bottom cover plate secured to the bottom chamber flange on the second distal end of the hollow chamber via one or more bolts, wherein the middle cover plate lies between the lower chamber flange and the bottom cover plate; wherein such configuration creates a hollow space inside the chamber that is flanked by the top cover plate and the bottom cover plate; a blending reactor with one or more inlets for receiving one or more substances; an upper multistage mixing cup configured to receive the one or more substances from the one or more inlets; at least one high shear mixer for mixing the one or more substances; at least one submersible actuator for actuating the high shear mixer; wherein the high shear mixer is attached to a shaft extension which, in turn, is coupled to the submersible actuator via a shaft coupling unit; an intermediate blending section for receiving the one or more substances from the upper multistage mixing cup; a cup base flange having a support platform for supporting one end of the upper multistage mixing cup; a lower multistage aging cup for further mixing of the one or more substances; wherein the upper multistage mixing cup comprises at least a first retention cup and a second retention cup, and wherein the second retention cup encircles the first retention cup; wherein the first retention cup is configured to receive the one or more substances from the one or more inlets; wherein the one or more substances are mixed by the high shear mixer in the first retention cup; wherein the second retention cup is configured to receive the one or more substances flowing from the first retention cup for further mixing; wherein the one or more substances are forwarded from the second retention cup into the intermediate blending stage, where the one or more substances come into contact with the cup base flange; wherein the cup base flange is secured to the submersible actuator and comprises one or more holes configured to lead the one or more substances into the lower multistage aging cup; wherein a first end of the at least one submersible actuator is connected to the cup base flange and a second end of the submersible actuator is fixedly resting on the middle cover plate, which serves a support base for the submersible actuator; wherein the lower multistage aging cup comprises a plurality of rings surrounding the submersible actuator, each ring having one or more holes configured to allow the one or more substances to flow into each subsequent ring until reaching the middle cover plate; and wherein the one or more substances are directed from the middle cover plate, via one or more holes on the middle cover plate, to the bottom cover plate which, in turn, has at least one outlet for releasing the mixed one or more substances.

To enable a better understanding of the objectives and features of the present invention, a brief description of the drawing below will be followed with a detailed description of the invention.

### BRIEF DESCRIPTION OF THE DRAWINGS.

Fig. 1 shows the exterior components of a liquid polymer or chemical activation system that uses a submersible actuator, in accordance with the principles of the present invention.
Fig. 2 shows the interior components of a liquid polymer or chemical activation system having a linear aging cup, in accordance with the principles of the present invention.
Fig. 3 shows an exploded view of the interior components of the liquid polymer or chemical activation system having a linear aging cup, in accordance with the principles of the present invention.
Fig. 4 shows the interior components of a liquid polymer or chemical activation system having a concave aging cup, in accordance with the principles of the present invention.
Fig. 5 shows an exploded view of the interior components of the liquid or chemical activation system having a concave aging cup, in accordance with the principles of the present invention.
Fig. 6 shows the interior components of a liquid polymer or chemical activation system having a submersible pneumatic or hydraulic actuator with portions of the linear aging cup removed to better show the pneumatic or hydraulic actuator, in accordance with the principles of the present invention.
Fig. 7 shows an exploded view of the interior components of the liquid polymer or chemical activation system having a submersible pneumatic or hydraulic actuator and with portions of the linear aging cup removed to better show the pneumatic or hydraulic actuator, in accordance with the principles of the present invention.
Fig. 8 shows the interior components of a liquid polymer or chemical activation system having a submersible pneumatic or hydraulic actuator with portions of the concave aging cup removed to better show the pneumatic or hydraulic actuator, in accordance with the principles of the present invention.
Fig. 9 shows an exploded view of the interior components of the liquid polymer or chemical activation system having a submersible pneumatic or hydraulic actuator with portions of the concave aging cup removed to better show the pneumatic or hydraulic actuator, in accordance with the principles of the present invention.
Fig. 10 shows the interior components of a liquid polymer or chemical system having a submersible electric actuator with portions of the linear aging cup removed to better show the electric actuator, in accordance with the principles of the present invention.
Fig. 11 shows an exploded view of the interior components of the liquid polymer or chemical activation system having a submersible electric actuator with portions of the linear aging cup removed to better show the electric actuator, in accordance with the principles of the present invention.
Fig. 12 shows the interior components of a liquid polymer or chemical activation system having a submersible electric actuator and with portions of the concave aging cup removed to better show the electric actuator, in accordance with the principles of the present invention.
Fig. 13 shows an exploded view of the interior components of the liquid polymer or chemical activation system having a submersible electric actuator with portions of the concave aging cup removed to better show the electric actuator, in accordance with the principles of the present invention.
Fig. 14 shows the interior components of a liquid polymer or chemical activation system in which the linear aging cup and chamber have a squared shape, in accordance with the principles of the present invention.
Fig. 15 shows an exploded view of the interior components of the liquid polymer or chemical activation system in which the linear aging cup and chamber have a squared shape, in accordance with the principles of the present invention.
Fig. 16 shows the interior components of a liquid polymer or chemical activation system in which the concave aging cup and chamber have a squared shape, in accordance with the principles of the present invention.
Fig. 17 shows an exploded view of the interior components of the liquid polymer or chemical activation system in which the concave aging cup and chamber have a squared shape, in accordance with the principles of the present invention.
Fig. 18 shows a convex aging cup of the liquid polymer or chemical activation system, in accordance with the principles of the present invention.
Fig. 19 shows the flow of the one or more substances as they move along the liquid polymer or chemical activation system, in accordance with the principles of the present invention.
Fig. 20 shows a first embodiment of a dry substance funnel attached to the liquid polymer or chemical activation system, in accordance with the principles of the present invention.
Fig. 21 shows an up-close view of the internal of the first embodiment of a dry substance funnel.
Fig. 22 shows an exploded view of the components of the first embodiment of the dry substance funnel attached to the liquid polymer or chemical activation system, in accordance with the principles of the present invention.
Fig. 23 shows a second embodiment of a dry substance funnel attached to the liquid polymer or chemical activation system, in accordance with the principles of the present invention.
Fig. 24 shows an up-close view of the internal of the second embodiment of a dry substance funnel.
Fig. 25 shows an exploded view of the components of the second embodiment of the dry substance funnel attached to the liquid polymer or chemical activation system, in accordance with the principles of the present invention.

### DETAILED DESCRIPTION OF THE INVENTION

The present disclosure discloses several exemplary embodiments of a liquid polymer or chemical activation system that uses a submersible actuator and has a plurality of blending zones or sections, as further described below.

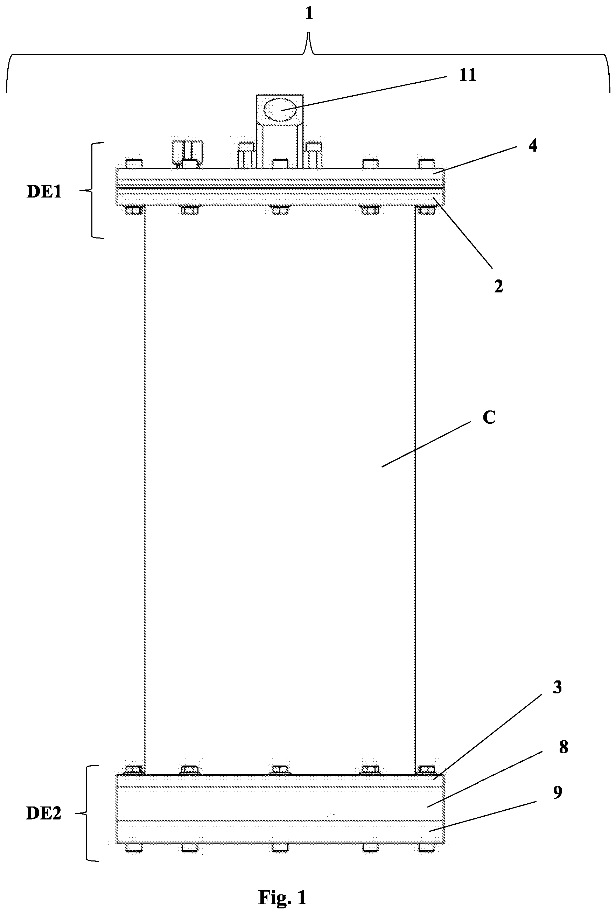

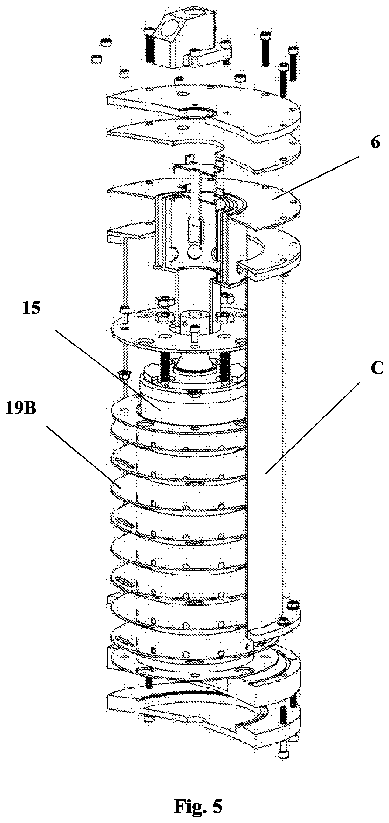

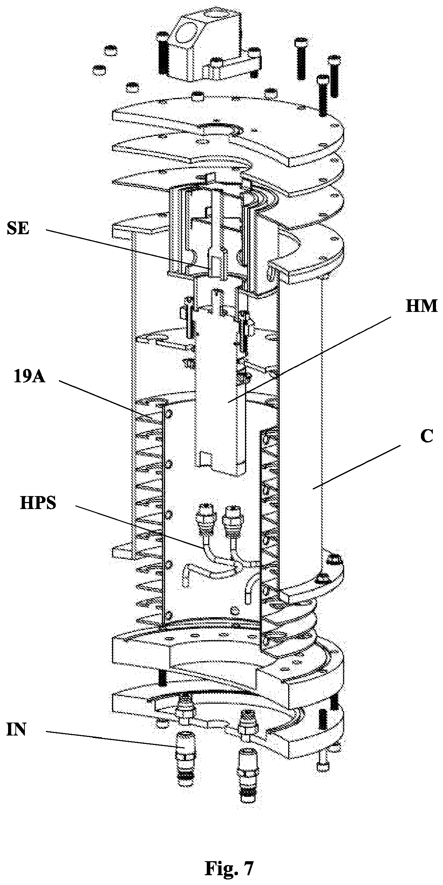

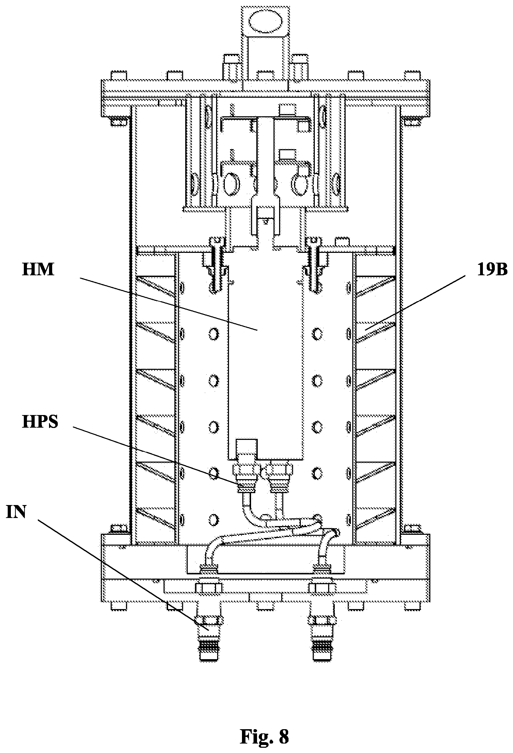

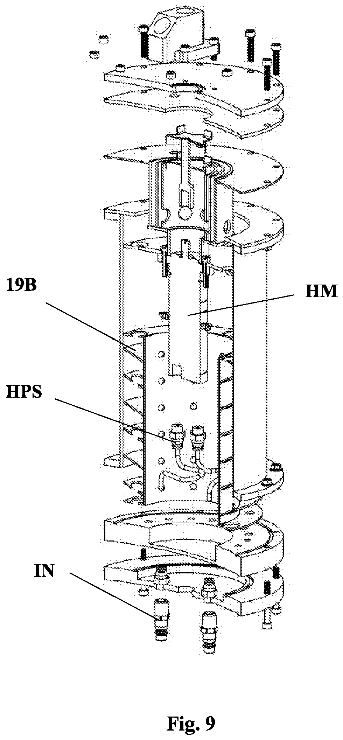

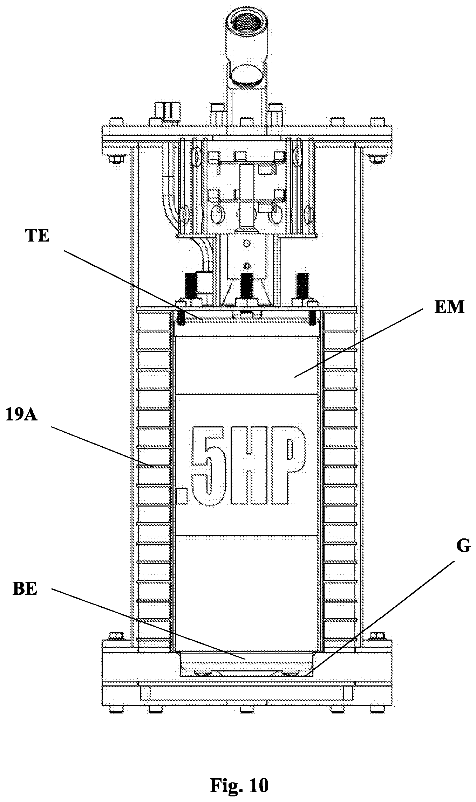

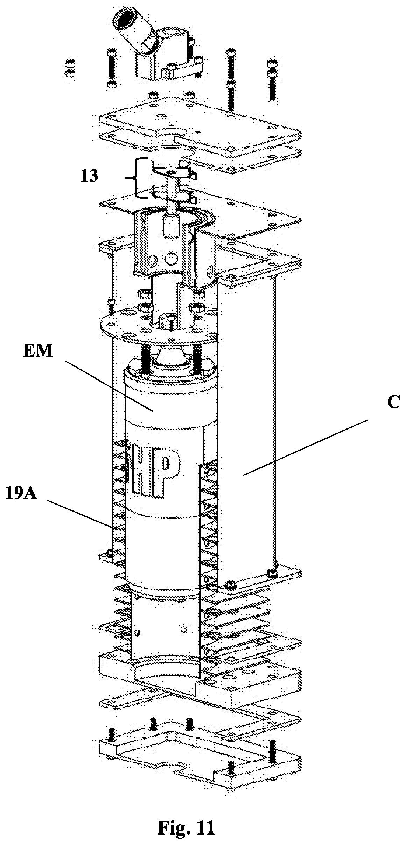

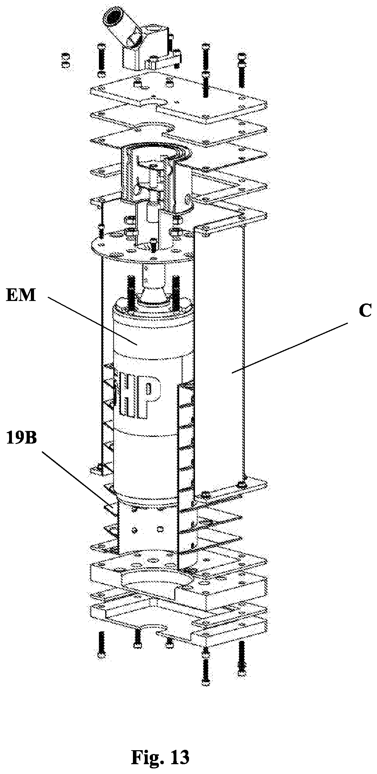

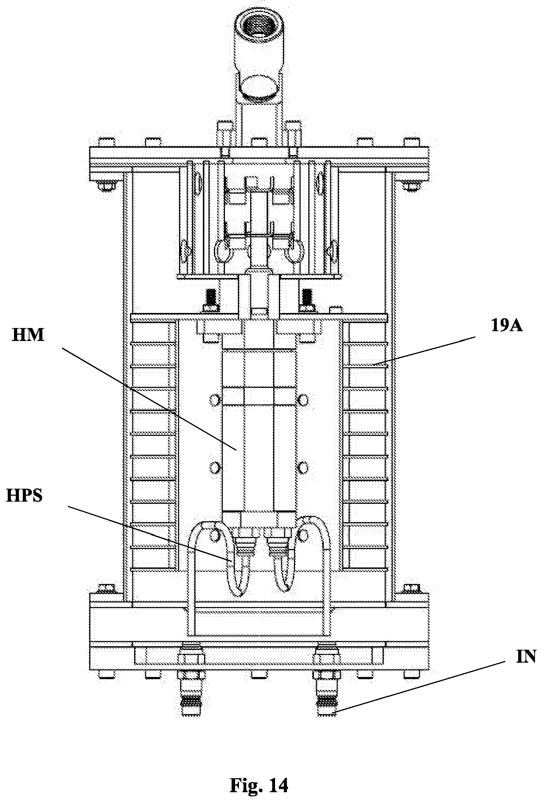

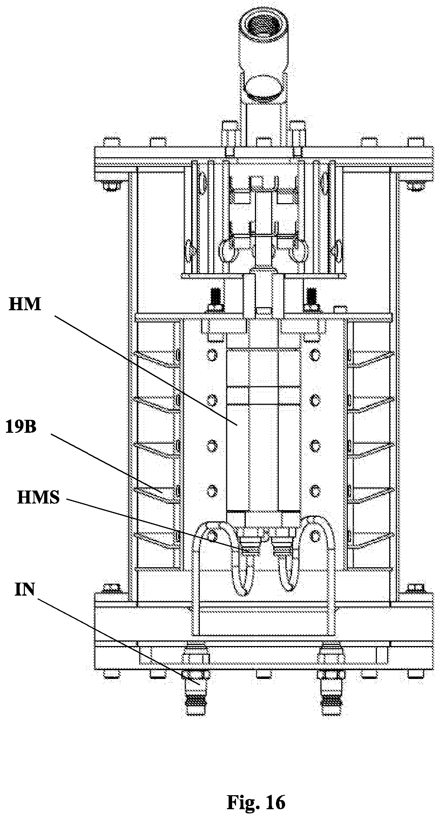

Figs. 1-17 show a liquid polymer or chemical activation system **1** that comprises a hollow chamber **C** having a first distal end **DE1** and a second distal end **DE2,** wherein each distal end is opposite to each other. The first distal end **DE1** of the hollow chamber **C** includes a top chamber flange 2 having one or more holes configured to receive one or more bolts, screws or fasteners S. Similarly, the second distal end **DE2** of the hollow chamber **C** includes a bottom chamber flange **3** having one or more holes configured to receive one or more bolts, screws or fasteners **S.** The hollow chamber **C** may be circular in shape, as shown in Figs. 1-9; but may have any other shape, as shown in Figs. 10-17, where the chamber **C** has a squared shape.

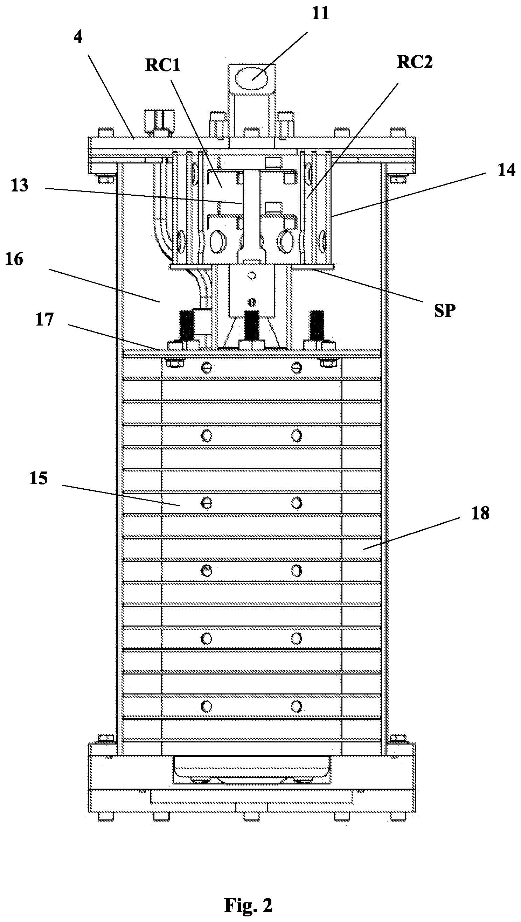

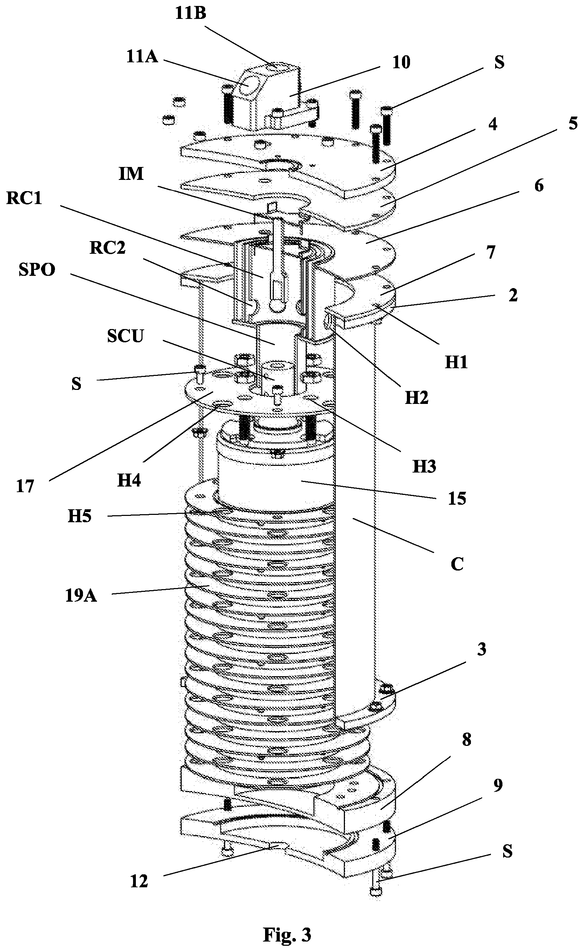

Additionally, as shown in Figs. 2-3, the liquid polymer or chemical activation system **1** comprises a top cover plate **4,** a first top gasket **5,** a cup flange **6** and a second top gasket **7** connected to or secured to the top chamber flange **2** on the first distal end **DE1** of the hollow chamber **C** via one or more bolts, screws or fasteners **S.** Each of the top cover plate **4,** first top gasket 5, top cup flange **6,** and second top gasket **7** has one or more holes **H1** configured to receive the one or more bolts, screws or fasteners **S.** Furthermore, the one or more holes **H1** on each of the previously mentioned individual elements (i.e., the top cover plate **4,** the first top gasket **5,** the top cup flange **6,** and the second top gasket **7**) are configured to align with each other and with the one or more holes on the top chamber flange **2,** as shown in Figs. 3, 5, 7, 9, 11, 13, 15 and 17. In this manner, the top cover plate **4,** the first top gasket **5,** the top cup flange **6,** the second top gasket **7,** and the top chamber flange **2** are tightly pressed against each other when secured via the one or more bolts, screws or fasteners **S.** Furthermore, as also shown in Figs. 2-3, the liquid polymer or chemical activation system **1** further comprises a middle cover plate **8** and a bottom cover plate **9** secured to the bottom chamber flange **3** on the second distal end **DE2** of the hollow chamber **C** via one or more bolts, screws or fasteners **S.** It should be noted that the middle cover plate **8** lies between the lower chamber flange **3** and the bottom cover plate **9.** Moreover, each of the bottom cover plate **9** and middle cover plate **8** has one or more holes **H1** configured to receive the one or more bolts, screws or fasteners **S.** Notably, the one or more holes **H1** on each of the aforementioned individual elements (i.e., the bottom cover plate **9** and the middle cover plate **8**) are configured to align with each other and with the one or more holes on the bottom chamber flange **3,** as shown in Figs. 3, 5, 7, 9, 11, 13, 15 and 17. In this manner, the bottom cover plate **9,** middle cover plate **8** and bottom chamber flange **3** are tightly pressed against each other when secured via the one or more bolts, screws or fasteners **S.** Such configuration of the liquid polymer or chemical activation system **1** creates a hollow space inside the chamber **C** that is flanked by the top cover plate **4** and the bottom cover plate **9.**

As shown in Figs. 1-17, the top cover plate **4** comprises a blending reactor **10** with at least one inlet **11** for receiving one or more substances, including, but not limited to, any liquid, solid particle or physical matter; and the bottom cover plate **9** comprises at least one outlet **12** for releasing the one or more substances. Moreover, as shown in Fig. 2, within the chamber **C,** the liquid polymer or chemical activation system **1** comprises an upper multistage mixing cup **14** comprising one or more retention cups **RC** configured to receive the one or more substances that were poured through the one or more inlet **11;** at least one high shear mixer **13** for mixing the one or more substances in the multistage mixing cup **14;** at least one submersible actuator **15** for actuating or rotating the high shear mixer **13;** an intermediate blending section **16** for receiving the mixed one or more substances from the multistage mixing cup **14;** a cup base flange **17** having one or more holes and a support platform for supporting one end of the multistage mixing cup **14;** and a lower multistage aging cup **18** for further mixing of the one or more substances.

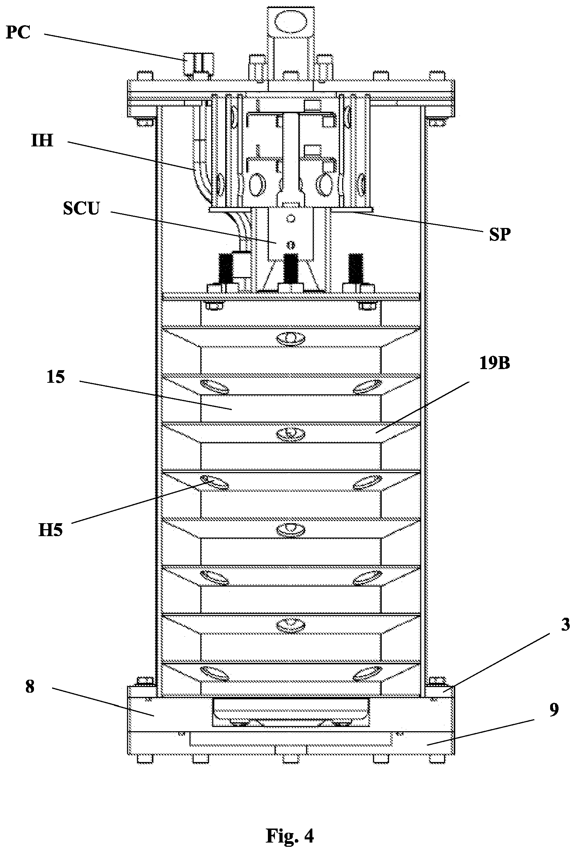

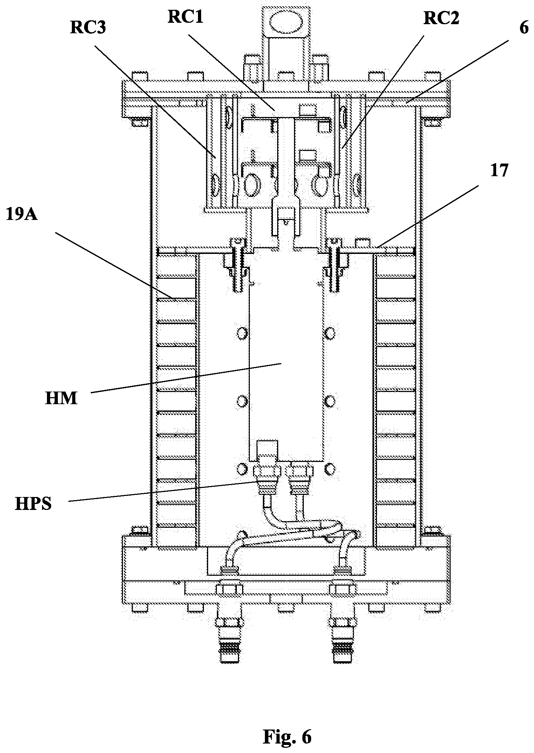

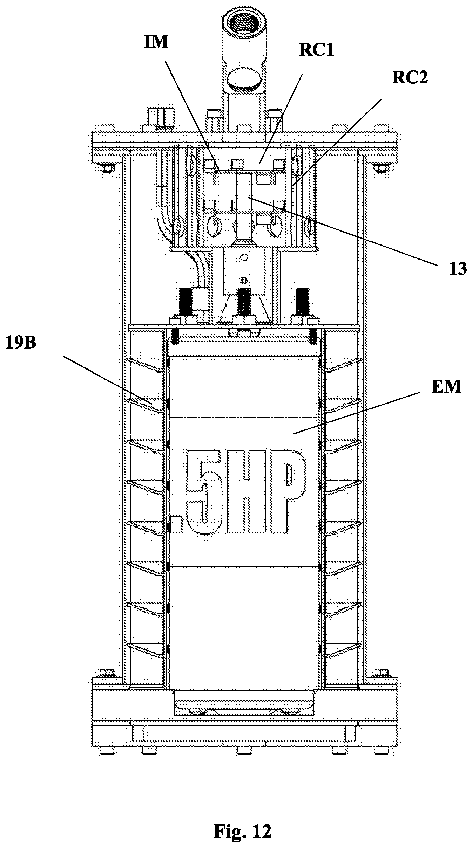

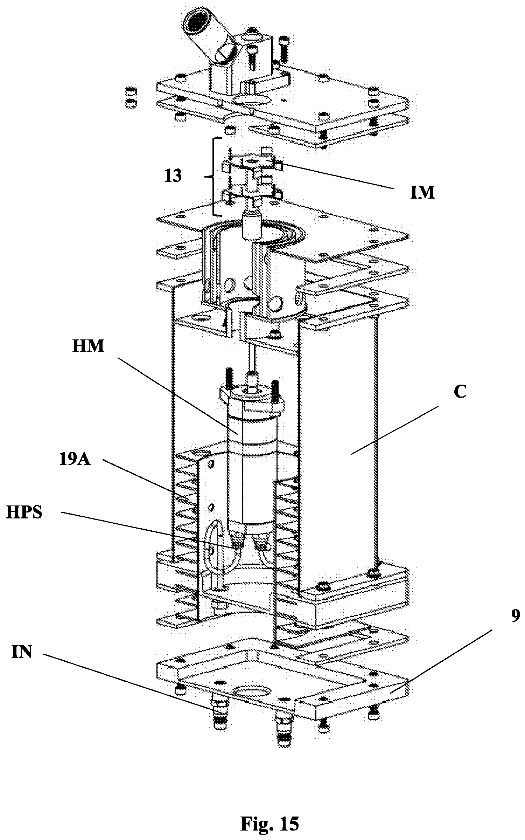

The 11A**14** constitutes the first blending zone of the liquid polymer or chemical activation system 1. As previously noted, the upper multistage mixing cup **14** comprises one or more retention cups **RC** configured to receive the one or more substances, as particularly shown in Fig 6. The upper multistage mixing cup **14** is preferably subdivided into at least a first retention cup **RC1** and a second retention cup **RC2,** wherein the second retention cup **RC2** encircles or encloses the first retention cup **RC1.** For embodiments having more than two retention cups, each subsequent retention cup encircles or encloses the previous retention cup. For example, a third retention cup **RC3** would encircle the second retention cup **RC2,** a fourth retention cup would encircle the third retention cup, and so on. It should be noted that a top portion of the upper multistage mixing cup **14** is encircled by the cup flange **6,** as shown in Fig. 3. When the one or more substances are poured through the one or more inlet **11,** the substances are led into and received by the first retention cup **RC1.** In embodiments having more than one inlet **11A, 11B,** the one or more substances come into contact with each other for the first time in the blending reactor **10,** and then flow into the first retention cup **RC1.** Once inside the first retention cup **RC1** the one or more substances are mixed by the high shear mixer **13.** As shown in Figs. 12 and 15, the high shear mixer **13** may include at least one impeller **IM** to assist in mixing the one or more substances before reaching the second retention cup **RC2,** as further discussed below. The impeller **IM** and high shear mixer **13** are attached to a shaft extension **SE** which in turn is coupled to the submersible actuator **15** via a shaft coupling unit **SCU.** The submersible actuator **15** actuates the rotation of the shaft extension **SE** and consequently the rotation of the impeller **IM** and high shear mixer **13.** It should be noted that the submersible actuator **15** may be a submersible electric motor or actuator **EM,** as shown in Figs. 2-5 and 7-13; or a submersible pneumatic or hydraulic motor **HM,** as shown in Figs. 6-9 and 14-17. For embodiments having an electric motor or actuator **EM,** the liquid polymer or chemical activation system **1** also comprises at least one electric power connector **PC** on the top cover plate **4,** that comprises an insulated harness **IH** connected to the submersible actuator **15,** as shown in Fig. 4. The horsepower of the submersible electric motor or actuator **EM** should preferably be between 0.3 HP and up to 300 HP. In some embodiments, however, the horsepower range may be higher or lower. For embodiments having a submersible pneumatic or hydraulic motor **HM,** as shown in Figs. 6, 7, 8, 9, 14, 15, 16 and 17, the liquid polymer or chemical activation system **1** is connected to a pneumatic or hydraulic power source **HPS** that provides power to the pneumatic or hydraulic motor **HM** via inputs **IN** on the bottom cover plate **9,** which in turn are connected to the submersible pneumatic or hydraulic motor **HM.**

It should be noted that, as shown in Fig. 2, a first end of the first and second retention cups **RC1, RC2** are in contact with the portion of the top cover plate 4 within the chamber **C,** whereas a second end of the first and second retention cups **RC1, RC2** are resting or supported by a support platform **SP** of the cup base flange **17.** The first retention cup **RC1** further includes one or more holes **H2** for releasing the mixed one or more substances into the second retention cup **RC2,** which as noted, encircles or encloses the first retention cup **RC1.** Once the one or more substances are received and further mixed in the second retention cup **RC2,** the one or more substances are flow, via one or more holes **H2** in the second retention cup **RC2,** into the intermediate blending stage **16.** The intermediate blending section **16** constitutes the second blending zone of the liquid polymer or chemical activation system **1.** It should be noted that the cup flange **6** forms the celling of the intermediate blending section **16,** as shown in Fig. 2. Once in the intermediate blending section **16** the one or more substances come into contact with the cup base flange **17.**

As shown in Fig. 3, the cup base flange **17** comprises one or more holes **H3** configured to receive one or more bolts, screws or fasteners S that are used to connect or secure the cup base flange **17** to the submersible actuator **15** and to the plurality of rings **19** that form part of the multistage aging cup **18,** as further described below. Moreover, the cup base flange **17** comprises one or more holes **H4** configured to lead or provide access to the one or more substances into the lower multistage aging cup **18.** As previously noted, the cup base flange **17** includes a support platform **SP** for supporting the retention cups **RC** of the upper multistage mixing cup **14.** The support platform **SP** has at least one opening **SPO** that provides the shaft coupling unit **SCU** with access to the submersible actuator **15.** It should also be noted that the submersible actuator **15** has a first end **TE** and a second end **BE.** On the first end **TE** the submersible actuator **15** is connected to the cup base flange **17** via one or more bolts, screws or fasteners **S;** whereas the second end **BE** of the submersible actuator **15** is fixedly resting on a groove **G** on the middle cover plate **8** that is configured to receive the second end **BE** of the submersible actuator **15** . As such, the middle cover plate **8** serves a support base for the second end **BE** of the submersible actuator **15.** Lastly, it must be noted that the middle cover plate **8** is connected to the bottom cover plate **9** which, in turn, has at least one outlet **12** for releasing the one or more substances.

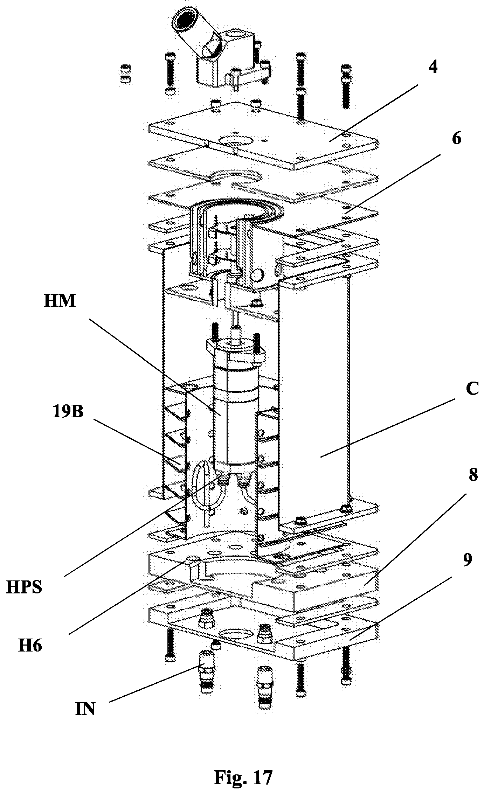

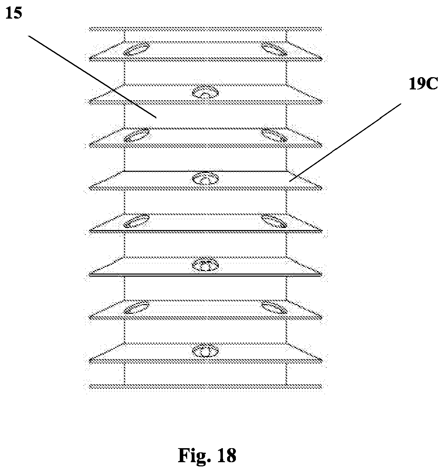

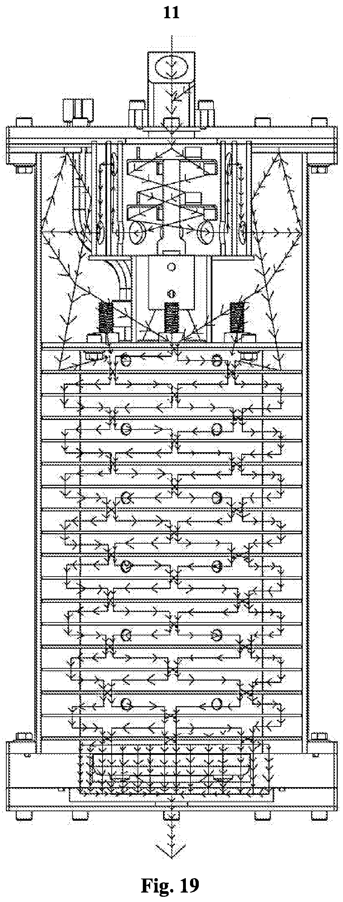

As noted above, once the mixed one or more substances reach the cup base flange **17,** the substances are led (by the flow of the one or more substances), via the one or more holes **H4,** into the lower multistage aging cup **18** (which is where the submersible actuator **15** is located). The lower multistage aging cup **18** constitutes the third blending zone of the liquid polymer or chemical activation system **1.** The lower multistage aging cup **18** comprises a plurality of rings **19** surrounding the submersible actuator **15,** in which the rings **19** are aligned one on top of the other. The rings **19** may be linear **19A** (as shown in Figs. 2, 3, 6, 7, 10, 11, 14, and 15), concave **19B** (as shown in Figs. 4, 5, 8, 9, 12, 13, 16, and 17), or convex **19C** (as shown in Fig. 18) in relation to the submersible actuator **15;** and can be manufactured from any strong durable material such as plastic, metal, etc. As previously noted, the rings **19** are secured to the cup base flange **17** via one or more bolts, screws or fasteners **S.** Moreover, each ring in the plurality of rings **19** includes one or more holes **H5.** The one or more holes **H5** allow the one or more substances to further mix as the substances move down along the lower multistage aging cup **18** until it reaches the middle cover plate **8.** As shown in Fig. 17, the middle cover plate **8** comprises one or more holes **H6** which lead the mixed one or substances directly into the bottom cover plate **9.** The bottom cover plate **9** constitute the fourth and final blending zone of the liquid polymer or chemical activation system **1** before the mixed one or more substances are released through the at least one outlet **12.** The flow of the one or more substances along the liquid polymer or chemical activation system **1** (from the moment the substances enter through inlet **11** to the moment they are released through outlet **12**) is shown in Fig. 19. Furthermore, the one or more holes **H5** in the plurality of rings **19** do not align with other holes in the plurality of rings **19.** This configuration provides further mixing of the one or more substances.

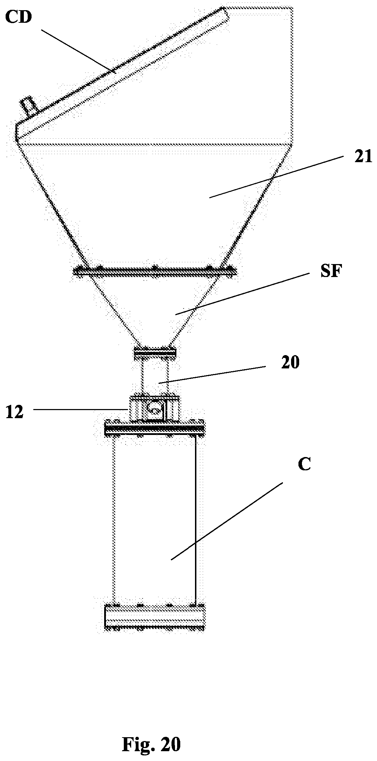

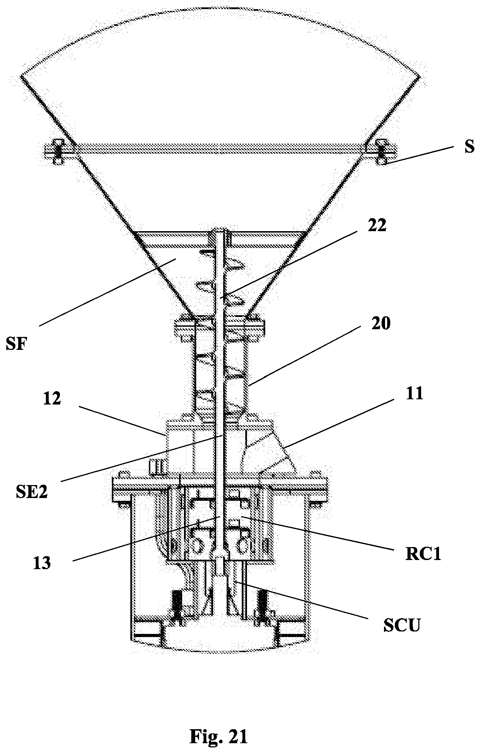

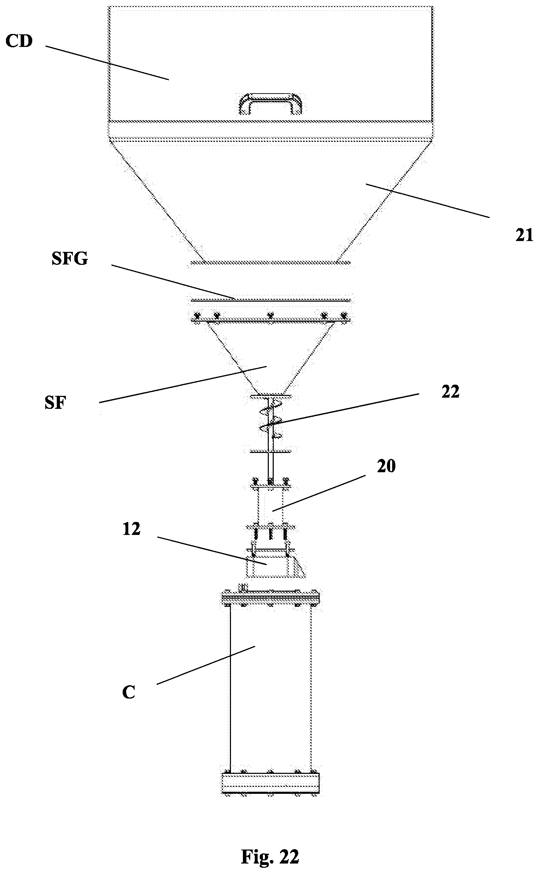

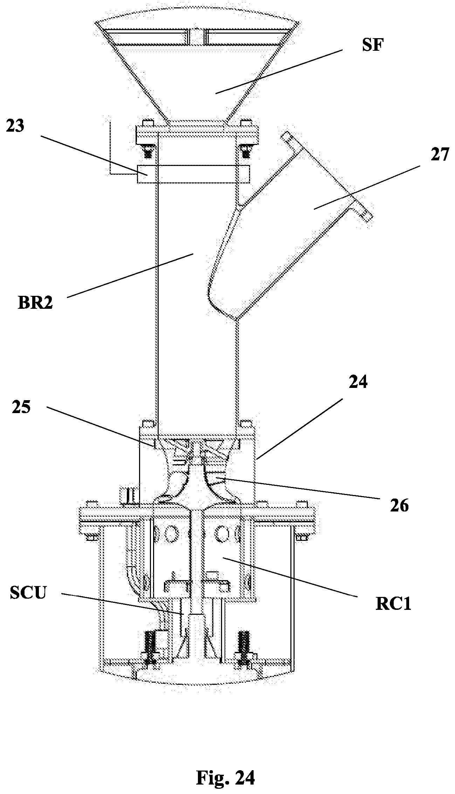

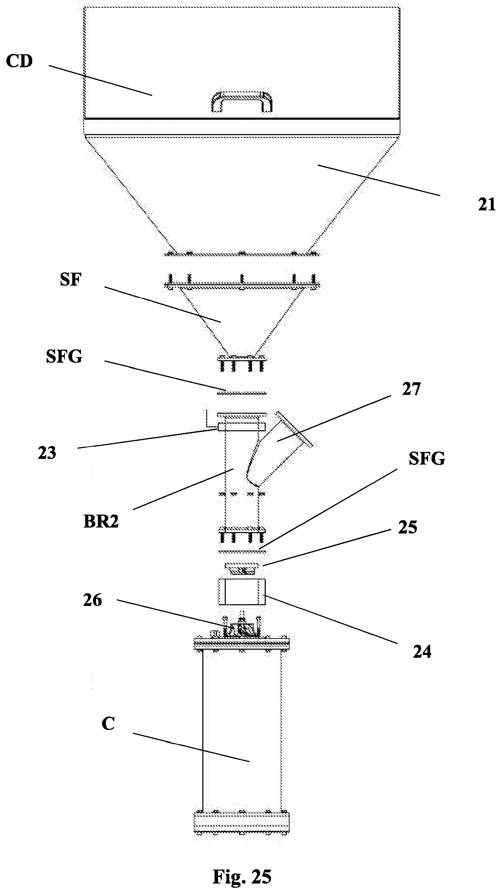

As shown in Figs. 20-25, the liquid polymer or chemical activation system **1** may also include a dry substance funnel **SF** attached to the blending reactor **10** via a dry substance interconnection inlet **20,** which is a tube that connects the dry substance funnel **SF** to the blending reactor **10.** A gasket **SFG** may be placed between the substance funnel **SF** and dry substance interconnection inlet **20** to provide a better connection between the dry substance funnel **SF** and the dry substance interconnection inlet **20.** The dry substance funnel **SF** may be used to pour non-liquid substances, such has powdered or solid substances, into the polymer activation system **1** in order to mix it with other substances. It is important to note that the narrow portion of the dry substance funnel **SF** is the portion that attaches to the dry substance inlet **20.** On the other hand, a hopper or container **21** may be attached, via one or more bolts, screws or fasteners **S,** to the wide portion of the dry substance funnel **SF.** The hopper or container **21** can be used to pour a larger portion of dry substances into the liquid polymer or chemical activation system **1,** and may include a closeable door **CD** in order to provide or close user access to the dry substance funnel **SF.** Once a dry substance is poured through the dry substance funnel **SF,** the dry substance is led, via the dry substance interconnection inlet **20,** to blending reactor **10** where it then reaches the first retention cup and is mixed with other substances (liquid or solid) in accordance with the principles of the present invention, as already disclosed discussed herein.

The present invention contemplates two embodiments in which the dry substance funnel **SF** may be used. In one embodiment, the dry substance funnel **SF** comprises a screw feeder **22** for initial mixing of the dry substance, as shown in Figs 20-22. In this first embodiment the liquid polymer or chemical activation system **1** comprises a longer or elongated shaft extension **SE2** that extends from the shaft coupling unit **SCU** all the way to the narrow portion of the dry substance funnel **SF.** As such, the portion of the shaft extension **SE2** in the first retention cup **RC1** includes the high shear mixer **13** and impeller **IM;** while the portion of the shaft extension **SE2** in the narrow portion of the dry substance funnel **SF** includes the screw feeder **22.** As the shaft extension **SE2** rotates, the screw feeder **22** also rotates in order to begin initial mixing of the dry substance. The rotation of the screw feeder **22** is slow on order to control the dosage of the dry substances. Once the dry substance reaches the first retaining cup **RC1,** the substance mixes with the other substance poured through inlet **11.**

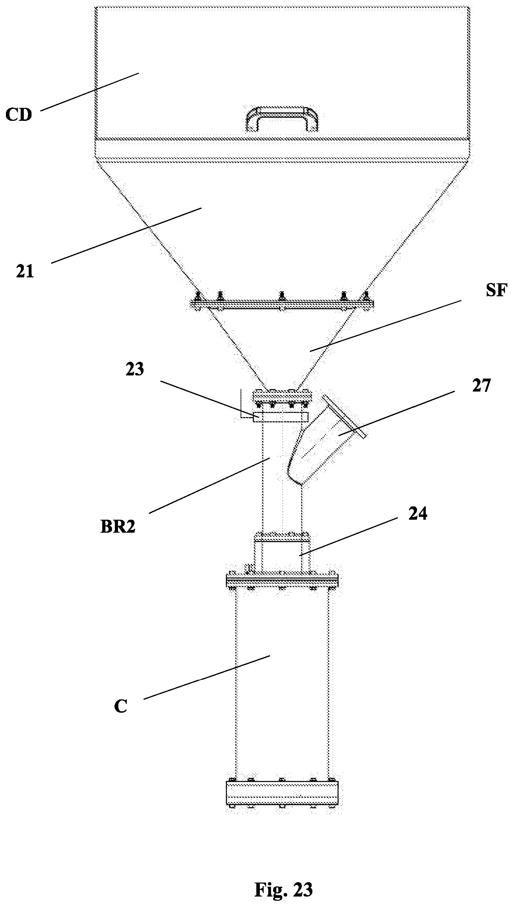

In the second embodiment, the narrow portion of the dry substance funnel **SF** is connected to the top end of a larger blending reactor **BR2** via one or more bolts, screws or fasteners **S,** as shown in Figs. 23-25. A gasket **SFG** may be incorporated between the dry substance funnel **SF** and top portion of the blending reactor **BR2** for better connection between these two elements. In this embodiment, the blending reactor **BR2** comprises a control valve **23** for controlling the amount of dry substances that enters the blending reactor **BR2;** and also comprises an inlet **27** for receiving liquid substances. The bottom end of the blending reactor **BR2** is connected, via one or more bolts, screws or fasteners **S,** to a compartment **24** that includes a stator **25.** The compartment **24,** in turn, is connected to the top cover plate **4.** The stator **25** comprises one or more jet impellers **26,** which serve the purpose of pushing the substances from the blending reactor **BR2** into the first retention cup **RC1.** A gasket **SFG** may be incorporated between the bottom portion of the blending reactor **BR2** and the compartment **24** for better connection between these two elements. Once a dry substance is poured through the dry substance funnel **SF,** the substance is led to the bleeding reactor **BR2** where it comes into contact with the liquid substance poured via the inlet **27.** The substances are then vigorously mixed by the jet impellers **26** and are then pushed into the first retention cup **RC1** to be mixed in accordance with the principles of the present invention, as already disclosed discussed herein.

Lastly, it is worth noting that in this second embodiment, the liquid polymer activation or chemical system **1** also comprises a longer a shaft extension **SE2** that extends from the shaft coupling unit **SCU** all the way to the compartment **24** and is connected to the jet impellers **26.** As such, the rotation of the shaft extension **SE2** enables the rotation of the jet impellers **26.**

## Claims

1. A liquid polymer or chemical activation system (1), comprising:
a chamber (C) having a top chamber flange (2) on a first distal end (DE1) and a bottom chamber flange (3) on a second distal end (DE2), wherein each distal end (DE1, DE2) is opposite to each other;
a top cover plate (4) secured to the top chamber flange (2) on the first distal end (DE1) of the chamber (C) via one or more bolts (S);
a middle cover plate (8) and a bottom cover plate (9) secured to the bottom chamber flange (3) on the second distal end (DE2) of the chamber (C) via one or more bolts (S), wherein the middle cover plate (8) lies between the lower chamber flange (3) and the bottom cover plate (9);
wherein such configuration creates a hollow space inside the chamber (C) that is flanked by the top cover plate (4) and the bottom cover plate (9);
a blending reactor (10) with one or more inlets (11A, 11B) for receiving one or more substances;
an upper multistage mixing cup (14) configured to receive the one or more substances from the one or more inlets (11A, 11B);
at least one high shear mixer for mixing (13) the one or more substances;
at least one submersible actuator (15) for actuating the high shear mixer (13);
wherein the high shear mixer (13) is attached to a shaft extension (SE) which, in turn, is coupled to the submersible actuator (15) via a shaft coupling unit (SCU);
an intermediate blending section (16) configured to receive the one or more substances from the upper multistage mixing cup (14);
a cup base flange (17) having a support platform (SP) for supporting one end of the upper multistage mixing cup (14);
a lower multistage aging cup (18) for further mixing of the one or more substances;
wherein the upper multistage mixing cup (14) comprises at least a first retention cup (RC1) and a second retention cup (RC2), and wherein the second retention cup (RC2) encircles the first retention cup (RC1);
wherein the first retention cup (RC1) is configured to receive the one or more substances from the one or more inlets (11A, 11B);
wherein the one or more substances are mixed by the high shear mixer (13) in the first retention cup (RC1);
wherein the second retention cup (RC2) is configured to receive the one or more substances flowing from the first retention cup (RC1) for further mixing;
wherein the one or more substances are forwarded from the second retention cup (RC2) into the intermediate blending section (16), where the one or more substances come into contact with the cup base flange (17);
wherein the cup base flange (17) is secured to the submersible actuator (15) and comprises one or more holes (H4) configured to lead the one or more substances into the lower multistage aging cup;
wherein a first end (TE) of the at least one submersible actuator (15) is connected to the cup base flange (17) and a second end (BE) of the submersible actuator is fixed to the middle cover plate (8), which serves a support base for the submersible actuator (15);
wherein the lower multistage aging cup (18) comprises a plurality of rings (19) surrounding the submersible actuator (15), each ring having one or more holes (H5) configured to allow the one or more substances to flow into each subsequent ring until reaching the middle cover plate (8), wherein the one or more holes (H5) in each ring of the plurality of rings (19) surrounding the submersible actuator (15) do not align with each other;
and
wherein the one or more substances are directed from the middle cover plate (8), via one or more holes (H6) on the middle cover plate (8), to the bottom cover plate (9) which, in turn, has at least one outlet (12) for releasing the mixed one or more substances.

2. The liquid polymer or chemical activation system of claim 1, wherein the chamber (C), the top cover plate (4), the middle cover plate (8) and the bottom cover plate (9) have a circular shape.

3. The liquid polymer or chemical activation system of claim 2, wherein the plurality of rings (19) surrounding the submersible actuator (15) have a circular shape.

4. The liquid polymer or chemical activation system of claim 1, wherein the chamber (C), the top cover plate (4), the middle cover plate (8) and the bottom cover plate (9) have a squared shape.

5. The liquid polymer or chemical activation system of claim 4, wherein the plurality of rings (19) surrounding the submersible actuator (15) have a squared shape.

6. The liquid polymer or chemical activation system of claim 1, further comprising a first top gasket (5), a cup flange (6) and a second top gasket (7) secured to the top chamber flange (2) on the first distal end (DE1) of the chamber (C) via one or more bolts (S), wherein the first top gasket (5), cup flange (6) and second top gasket (7) lie between the top cover plate (4) and the top chamber flange (2).

7. The liquid polymer or chemical activation system of claim 6, wherein the cup flange (6) forms a celling to the intermediate blending section (16).

8. The liquid polymer or chemical activation system of claim 1, wherein the high shear mixer (13) comprises at least one impeller (IM) to assist in mixing the one or more substances before reaching the second retention cup (RC2).

9. The liquid polymer or chemical activation system of claim 1, wherein the support platform (SP) has at least one opening (SPO) that provides the shaft coupling unit (SCU) with access to the submersible actuator (15).

10. The liquid polymer or chemical activation system of claim 1, wherein the first retention cup (RC1) includes one or more openings (H2) for facilitating the flow of the one or more substances into the second retention cup (RC2).

11. The liquid polymer or chemical activation system of claim 1, wherein the second retention cup (RC2) includes one or more openings (H2) for facilitating the flow of the one or more substances into the intermediate blending section (16).

12. The liquid polymer or chemical activation system of claim 1, wherein the submersible actuator (15) is an electric motor (EM).

13. The liquid polymer or chemical activation system of claim 1, wherein the submersible actuator (15) is a hydraulic motor or a pneumatic motor (HM).

14. The liquid polymer or chemical activation system of claim 13, further comprising a pneumatic or hydraulic power source (HPS) that provides power to the pneumatic or hydraulic motor (HM) via inputs (IN) on the bottom cover plate (9).

15. The liquid polymer or chemical activation system of claim 1, wherein the plurality of rings (19) surrounding the submersible actuator (15) are linear (19A) in relation to the submersible actuator (15).

16. The liquid polymer or chemical activation system of claim 1, wherein the plurality of rings (19) surrounding the submersible actuator (15) are concave (19B) in relation to the submersible actuator (15).

17. The liquid polymer or chemical activation system of claim 1, wherein the plurality of rings (19) surrounding the submersible actuator (15) are convex (19C) in relation to the submersible actuator (15).

18. The liquid polymer or chemical activation system of claim 1, wherein the upper multistage mixing cup (14) comprises three or more retention cups (RC1, RC2, RC3).

19. The liquid polymer or chemical activation system of claim 1, further comprising a dry substance funnel (SF) attached to the blending reactor (10).

20. The liquid polymer or chemical activation system of claim 19, further comprising a hopper (21) attached to the dry substance funnel (SF).

21. The liquid polymer or chemical activation system of claim 19, wherein the dry substance funnel (SF) comprises a screw feeder (22).

22. The liquid polymer or chemical activation system of claim 21, wherein the screw feeder (22) is attached to the shaft extension (SE).

23. The liquid polymer or chemical activation system of claim 19, wherein the blending reactor (10) is attached to a compartment (24) that comprises a stator (25).

24. The liquid polymer or chemical activation system of claim 23, wherein the stator (25) comprises at least one jet impeller (26).

25. The liquid polymer or chemical activation system of claim 24, wherein the at least one jet impeller (26) is connected to the shaft extension (SE).

26. The liquid polymer or chemical activation system of claim 1, wherein the plurality of rings (19) surrounding the submersible actuator (15) are secured, via one or more bolts (S), to the cup base flange (17).

## Patentansprüche

1. System (1) zur Aktivierung von flüssigem Polymer oder von Chemikalien umfassend:
eine Kammer (C) mit einem oberen Kammerflansch (2) an einem ersten distalen Ende (DEI) und mit einem unteren Kammerflansch (3) an einem zweiten distalen Ende (DE2), wobei die distalen Enden (DEI, DE2) einander jeweils gegenüberliegen,
eine obere Abdeckplatte (4), die über eine oder mehrere Schrauben (S) am oberen Kammerflansch (2) am ersten distalen Ende (DEI) der Kammer (C) befestigt ist,
eine mittlere Abdeckplatte (8) und eine untere Abdeckplatte (9), die über eine oder mehrere Schrauben (S) am unteren Kammerflansch (3) am zweiten distalen Ende (DE2) der Kammer (C) befestigt sind, wobei die mittlere Abdeckplatte (8) zwischen dem unteren Kammerflansch (3) und der unteren Abdeckplatte (9) liegt,
wobei diese Konfiguration einen Hohlraum innerhalb der Kammer (C) schafft, der von der oberen Abdeckplatte (4) und von der unteren Abdeckplatte (9) flankiert wird,
einen Mischreaktor (10) mit einem oder mehreren Einlässen (11A, 11B) zum Aufnehmen einer oder mehrerer Substanzen,
einen oberen mehrstufigen Mischbecher (14), der zum Aufnehmen der einen oder mehreren Substanzen aus dem einen oder den mehreren Einlässen (11A, 11B) ausgestaltet ist,
mindestens einen Hochschermischer (13) zum Mischen der einen oder mehreren Substanzen,
mindestens einen Tauchantrieb (15) zum Antreiben des Hochschermischers (13),
wobei der Hochschermischer (13) an einer Wellenverlängerung (SE) befestigt ist, die wiederum über eine Wellenkupplungseinheit (SCU) mit dem Tauchantrieb (15) gekoppelt ist,
einen Zwischenmischabschnitt (16), der dazu ausgestaltet ist, die eine oder mehreren Substanzen aus dem oberen mehrstufigen Mischbecher (14) aufzunehmen,
einen Becherbasisflansch (17) mit einer Stützplattform (SP) zum Stützen eines Endes des oberen mehrstufigen Mischbechers (14),
einen unteren mehrstufigen Alterungsbecher (18) zum weiteren Mischen der einen oder mehreren Substanzen,
wobei der obere mehrstufige Mischbecher (14) mindestens einen ersten Rückhaltebecher (RC1) und einen zweiten Rückhaltebecher (RC2) umfasst, und, wobei der zweite Rückhaltebecher (RC2) den ersten Rückhaltebecher (RC1) umgibt,
wobei der erste Rückhaltebecher (RC1) so ausgestaltet ist, dass er die eine oder mehreren Substanzen aus dem einen oder den mehreren Einlässen (11A, 11B) aufnimmt,
wobei die eine oder mehreren Substanzen durch den Hochschermischer (13) in dem ersten Rückhaltebecher (RC1) gemischt werden,
wobei der zweite Rückhaltebecher (RC2) so ausgestaltet ist, dass er die eine oder mehreren Substanzen, die aus dem ersten Rückhaltebecher (RC1) fließen, zum weiteren Mischen aufnimmt,
wobei die eine oder mehreren Substanzen aus dem zweiten Rückhaltebecher (RC2) in den Zwischenmischabschnitt (16) weitergeleitet werden, wo die eine oder mehreren Substanzen mit dem Becherbodenflansch (17) in Kontakt kommen,
wobei der Becherbodenflansch (17) am Tauchantrieb (15) befestigt ist und ein oder mehrere Löcher (H4) aufweist, die so ausgestaltet sind, dass die eine oder mehreren Substanzen in den unteren mehrstufigen Alterungsbecher gelangen,
wobei ein erstes Ende (TE) des mindestens einen Tauchantriebs (15) mit dem Becherbodenflansch (17) verbunden ist und ein zweites Ende (BE) des Tauchantriebs an der mittleren Abdeckplatte (8) befestigt ist, die als Stützbasis für den Tauchantrieb (15) dient,
wobei der untere mehrstufige Alterungsbecher (18) eine Vielzahl von Ringen (19) umfasst, die den Tauchantrieb (15) umgeben, wobei jeder Ring ein oder mehrere Löcher (H5) aufweist, die so ausgestaltet sind, dass die eine oder mehreren Substanzen in jeden nachfolgenden Ring fließen können, bis sie die mittlere Abdeckplatte (8) erreichen, wobei die ein oder mehreren Löcher (H5) in jedem Ring der Vielzahl von Ringen (19), die den Tauchantrieb (15) umgeben, nicht miteinander ausgerichtet sind, und
wobei die eine oder mehreren Substanzen von der mittleren Abdeckplatte (8) über ein oder mehrere Löcher (H6) auf der mittleren Abdeckplatte (8) zu der unteren Abdeckplatte (9) geleitet werden, die wiederum mindestens einen Auslass (12) zum Abgeben der vermischten einen oder mehreren Substanzen aufweist.

2. System zur Aktivierung von flüssigem Polymer oder von Chemikalien nach Anspruch 1, wobei die Kammer (C), die obere Abdeckplatte (4), die mittlere Abdeckplatte (8) und die untere Abdeckplatte (9) eine kreisförmige Form aufweisen.

3. System zur Aktivierung von flüssigem Polymer oder von Chemikalien nach Anspruch 2, wobei die den Tauchantrieb (15) umgebenden Ringe (19) eine kreisförmige Form aufweisen.

4. System zur Aktivierung von flüssigem Polymer oder von Chemikalien nach Anspruch 1, wobei die Kammer (C), die obere Abdeckplatte (4), die mittlere Abdeckplatte (8) und die untere Abdeckplatte (9) eine quadratische Form aufweisen.

5. System zur Aktivierung von flüssigem Polymer oder von Chemikalien nach Anspruch 4, wobei die den Tauchantrieb (15) umgebende Vielzahl von Ringen (19) eine quadratische Form aufweisen.

6. System zur Aktivierung von flüssigem Polymer oder von Chemikalien nach Anspruch 1, ferner umfassend eine erste obere Dichtung (5), einen Becherflansch (6) und eine zweite obere Dichtung (7), die über eine oder mehrere Schrauben (S) an dem oberen Kammerflansch (2) an dem ersten distalen Ende (DEI) der Kammer (C) befestigt sind, wobei die erste obere Dichtung (5), der Becherflansch (6) und die zweite obere Dichtung (7) zwischen der oberen Abdeckplatte (4) und dem oberen Kammerflansch (2) liegen.

7. System zur Aktivierung von flüssigem Polymer oder von Chemikalien nach Anspruch 6, wobei der Becherflansch (6) eine Decke zu dem Zwischenmischabschnitt (16) ausbildet.

8. System zur Aktivierung von flüssigem Polymer oder von Chemikalien nach Anspruch 1, wobei der Hochschermischer (13) mindestens ein Laufrad (IM) umfasst, dass das Vermischen der einen oder mehreren Substanzen vor dem Erreichen des zweiten Rückhaltebehälters (RC2) unterstützt.

9. System zur Aktivierung von flüssigem Polymer oder von Chemikalien nach Anspruch 1, wobei die Trägerplattform (SP) mindestens eine Öffnung (SPO) aufweist, welche die Wellenkupplungseinheit (SCU) mit Zugang zu dem Tauchmotor (15) bereitstellt.

10. System zur Aktivierung von flüssigem Polymer oder von Chemikalien nach Anspruch 1, wobei der erste Rückhaltebehälter (RC1) eine oder mehrere Öffnungen (H2) aufweist, um den Zufluss der einen oder mehreren Substanzen in den zweiten Rückhaltebehälter (RC2) zu erleichtern.

11. System zur Aktivierung von flüssigem Polymer oder von Chemikalien nach Anspruch 1, wobei der zweite Rückhaltebehälter (RC2) eine oder mehrere Öffnungen (H2) aufweist, um den Zufluss der einen oder mehreren Substanzen in den Zwischenmischabschnitt (16) zu erleichtern.

12. System zur Aktivierung von flüssigem Polymer oder von Chemikalien nach Anspruch 1, wobei der Tauchantrieb (15) ein Elektromotor (EM) ist.

13. System zur Aktivierung von flüssigem Polymer oder von Chemikalien nach Anspruch 1, wobei der Tauchantrieb (15) ein Hydraulikmotor oder ein Pneumatikmotor (HM) ist.

14. System zur Aktivierung von flüssigem Polymer oder von Chemikalien nach Anspruch 13, das zusätzlich eine pneumatische oder hydraulische Antriebsquelle (HPS) umfasst, die den pneumatischen oder hydraulischen Motor (HM) über Eingänge (IN) an der unteren Abdeckplatte (9) mit Strom versorgt.

15. System zur Aktivierung von flüssigem Polymer oder von Chemikalien nach Anspruch 1, wobei die den Tauchantrieb (15) umgebende Vielzahl von Ringen (19) im Verhältnis zu dem Tauchantrieb (15) linear (19A) sind.

16. System zur Aktivierung von flüssigem Polymer oder von Chemikalien nach Anspruch 1, wobei die den Tauchantrieb (15) umgebende Vielzahl von Ringen (19) im Verhältnis zu dem Tauchantrieb (15) konkav (19B) sind.

17. System zur Aktivierung von flüssigem Polymer oder von Chemikalien nach Anspruch 1, wobei die den Tauchantrieb (15) umgebende Vielzahl von Ringen (19) im Verhältnis zu dem Tauchantrieb (15) konvex (19C) sind.

18. System zur Aktivierung von flüssigem Polymer oder von Chemikalien nach Anspruch 1, wobei der obere mehrstufige Mischbecher (14) drei oder mehr Rückhaltebecher (RC1, RC2, RC3) umfasst.

19. System zur Aktivierung von flüssigem Polymer oder von Chemikalien nach Anspruch 1, ferner umfassend einen an dem Mischreaktor (10) befestigten Trockensubstanztrichter (SF).

20. System zur Aktivierung von flüssigem Polymer oder von Chemikalien nach Anspruch 19, ferner umfassend einen an dem Trockensubstanztrichter (SF) befestigten Trichter (21).

21. System zur Aktivierung von flüssigem Polymer oder von Chemikalien nach Anspruch 19, wobei der Trockensubstanztrichter (SF) eine Dosierschnecke (22) aufweist.

22. System zur Aktivierung von flüssigem Polymer oder von Chemikalien nach Anspruch 21, wobei die Dosierschnecke (22) an der Wellenverlängerung (SE) befestigt ist.

23. System zur Aktivierung von flüssigem Polymer oder von Chemikalien nach Anspruch 19, wobei der Mischreaktor (10) an einer Kammer (24), welche einen Stator (25) aufweist, befestigt ist.

24. System zur Aktivierung von flüssigem Polymer oder von Chemikalien nach Anspruch 23, wobei der Stator (25) mindestens ein Strahl-Laufrad (26) aufweist.

25. System zur Aktivierung von flüssigem Polymer oder von Chemikalien nach Anspruch 24, wobei das mindestens eine Strahl-Laufrad (26) mit der Wellenverlängerung (SE) verbunden ist.

26. System zur Aktivierung von flüssigem Polymer oder von Chemikalien nach Anspruch 1, wobei die Vielzahl von Ringen (19), die den Tauchantrieb (15) umgeben, über eine oder mehrere Schrauben (S) an den Becherbodenflansch (17) befestigt sind.

## Revendications

1. Polymère liquide ou système d'activation chimique (1) comprenant :
une chambre (C) dotée d'une bride supérieure (2) à une première extrémité distale (DE1) et d'une bride inférieure (3) à une seconde extrémité distale (DE2), chaque extrémité distale (DE1, DE2) étant opposée ;
une plaque de couvercle supérieure (4) fixée à la bride supérieure (2) à la première extrémité distale (DE1) de la chambre (C) par un ou plusieurs boulons (S) ;
une plaque de couvercle intermédiaire (8) et une plaque de couvercle inférieure (9) fixées à la bride inférieure (3) à la seconde extrémité distale (DE2) de la chambre (C) par un ou plusieurs boulons (S), la plaque de couvercle intermédiaire (8) étant située entre la bride inférieure (3) et la plaque de couvercle inférieure (9) ;
dans lequel cette configuration crée un espace creux à l'intérieur de la chambre (C) flanqué de la plaque de couvercle supérieure (4) et de la plaque de couvercle inférieure (9) ;
un réacteur de mélange (10) avec une ou plusieurs entrées (11A, 11B) pour recevoir une ou plusieurs substances ;
une coupelle de mélange multi-étages supérieure (14) configurée pour recevoir la ou les plusieurs substances provenant d'une ou plusieurs entrées (11A, 11B) ;
au moins un mélangeur à cisaillement élevé pour mélanger (13) la ou les plusieurs substances ;
au moins un actionneur submersible (15) pour actionner le mélangeur à cisaillement élevé (13) ;
dans lequel le mélangeur à cisaillement élevé (13) est fixé à une extension d'arbre (SE) qui, à son tour, est couplée à l'actionneur submersible (15) via une unité d'accouplement d'arbre (SCU) ;
une section de mélange intermédiaire (16) configurée pour recevoir la ou les plusieurs provenant de la coupelle de mélange multi-étages supérieure (14) ;
une bride de base de coupelle (17) dotée d'une plateforme de support (SP) destinée à supporter une extrémité de la coupelle de mélange multi-étages supérieure (14) ;
une coupelle de vieillissement multi-étages inférieure (18) destinée à mélanger davantage la ou les plusieurs substances ;
dans lequel la coupelle de mélange multi-étages supérieure (14) comprend au moins une première coupelle de rétention (RC1) et une seconde coupelle de rétention (RC2), la seconde coupelle de rétention (RC2) entourant la première coupelle de rétention (RC1) ;
dans lequel la première coupelle de rétention (RC1) est conçue pour recevoir la ou les plusieurs substances provenant des entrées (11 A, 11B) ;
dans lequel la ou les plusieurs substances sont mélangées par le mélangeur à cisaillement élevé (13) dans la première coupelle de rétention (RC1) ;
dans lequel la seconde coupelle de rétention (RC2) est conçue pour recevoir la ou les plusieurs substances s'écoulant de la première coupelle de rétention (RC1) pour un mélange ultérieur;
dans lequel la ou les plusieurs substances sont transférées de la seconde coupelle de rétention (RC2) vers la section de mélange intermédiaire (16), où la ou les plusieurs substances entrent en contact avec la bride de base de la coupelle (17) ;
dans lequel la bride de base de la coupelle (17) est fixée à l'actionneur submersible (15) et comprend un ou plusieurs trous (H4) configurés pour guider la ou les plusieurs substances dans la coupelle de vieillissement multi-étages inférieure ;
dans lequel une première extrémité (TE) du au moins un actionneur submersible (15) est reliée à la bride de base de la coupelle (17) et une seconde extrémité (BE) de l'actionneur submersible est fixée à la plaque de couvercle intermédiaire (8), qui sert de base de support à l'actionneur submersible (15) ;
dans lequel la coupelle de vieillissement multi-étages inférieure (18) comprend une pluralité d'anneaux (19) entourant l'actionneur submersible (15), chaque anneau comportant un ou plusieurs trous (H5) configurés pour permettre la ou les plusieurs substances s'écoulant dans chaque anneau suivant jusqu'à atteindre la plaque de couvercle intermédiaire (8), dans lequel le ou les plusieurs trous (H5) de chaque anneau de la pluralité d'anneaux (19) entourant l'actionneur submersible (15) ne sont pas alignés les uns avec les autres ;
et
dans lequel la ou les plusieurs substances sont dirigées de la plaque de couvercle intermédiaire (8), via un ou plusieurs trous (H6) sur la plaque de couvercle intermédiaire (8), vers la plaque de couvercle inférieure (9) qui, à son tour, comporte au moins une sortie (12) pour libérer la ou les plusieurs substances mélangées.

2. Polymère liquide ou système d'activation chimique selon la revendication 1, dans lequel la chambre (C), la plaque de couvercle supérieure (4), la plaque de couvercle intermédiaire (8) et la plaque de couvercle inférieure (9) ont une forme circulaire.

3. Polymère liquide ou système d'activation chimique selon la revendication 2, dans lequel la pluralité d'anneaux (19) entourant l'actionneur submersible (15) ont une forme circulaire.

4. Polymère liquide ou système d'activation chimique selon la revendication 1, dans lequel la chambre (C), la plaque de couvercle supérieure (4), la plaque de couvercle intermédiaire (8) et la plaque de couvercle inférieure (9) ont une forme carrée.

5. Polymère liquide ou système d'activation chimique selon la revendication 4, dans lequel la pluralité d'anneaux (19) entourant l'actionneur submersible (15) ont une forme carrée.

6. Polymère liquide ou système d'activation chimique selon la revendication 1, comprenant en outre un premier joint supérieur (5), une bride de coupelle (6) et un second joint supérieur (7) fixés à la bride de chambre supérieure (2) sur la première extrémité distale (DE1) de la chambre (C) par l'intermédiaire d'un ou plusieurs boulons (S), dans lequel le premier joint supérieur (5), la bride de coupelle (6) et le second joint supérieur (7) se trouvent entre la plaque de couvercle supérieure (4) et la bride de chambre supérieure (2).

7. Polymère liquide ou système d'activation chimique selon la revendication 6, dans lequel la bride de coupelle (6) forme un plafond à la section de mélange intermédiaire (16).

8. Polymère liquide ou système d'activation chimique selon la revendication 1, dans lequel le mélangeur à cisaillement élevé (13) comprend au moins une turbine (IM) pour aider à mélanger la ou les substances avant d'atteindre la seconde coupelle de rétention (RC2).

9. Polymère liquide ou système d'activation chimique selon la revendication 1, dans lequel la plate-forme de support (SP) comporte au moins une ouverture (SPO) qui fournit à l'unité d'accouplement d'arbre (SCU) un accès à l'actionneur submersible (15).

10. Polymère liquide ou système d'activation chimique selon la revendication 1, dans lequel la première coupelle de rétention (RC1) comprend une ou plusieurs ouvertures (H2) pour faciliter l'écoulement de la ou des plusieurs substances dans la seconde coupelle de rétention (RC2).

11. Polymère liquide ou système d'activation chimique selon la revendication 1, dans lequel la seconde coupelle de rétention (RC2) comprend une ou plusieurs ouvertures (H2) pour faciliter l'écoulement de la ou des plusieurs substances dans la section de mélange intermédiaire (16).

12. Polymère liquide ou système d'activation chimique selon la revendication 1, dans lequel l'actionneur submersible (15) est un moteur électrique (EM).

13. Polymère liquide ou système d'activation chimique selon la revendication 1, dans lequel l'actionneur submersible (15) est un moteur hydraulique ou un moteur pneumatique (HM).

14. Polymère liquide ou système d'activation chimique selon la revendication 13, comprenant en outre une source d'énergie pneumatique ou hydraulique (HPS) qui fournit de l'énergie au moteur pneumatique ou hydraulique (HM) via des entrées (IN) sur la plaque de couvercle inférieure (9).

15. Polymère liquide ou système d'activation chimique selon la revendication 1, dans lequel la pluralité d'anneaux (19) entourant l'actionneur submersible (15) sont linéaires (19A) par rapport à l'actionneur submersible (15).

16. Polymère liquide ou système d'activation chimique selon la revendication 1, dans lequel la pluralité d'anneaux (19) entourant l'actionneur submersible (15) sont concaves (19B) par rapport à l'actionneur submersible (15).

17. Polymère liquide ou système d'activation chimique selon la revendication 1, dans lequel la pluralité d'anneaux (19) entourant l'actionneur submersible (15) sont convexes (19C) par rapport à l'actionneur submersible (15).

18. Polymère liquide ou système d'activation chimique selon la revendication 1, dans lequel la coupelle de mélange multi-étages supérieure (14) comprend trois coupelles de rétention ou plus (RC1, RC2, RC3).

19. Polymère liquide ou système d'activation chimique selon la revendication 1, comprenant en outre un entonnoir à substance sèche (SF) fixé au réacteur de mélange (10).

20. Polymère liquide ou système d'activation chimique selon la revendication 19, comprenant en outre une trémie (21) fixée à l'entonnoir de substance sèche (SF).

21. Polymère liquide ou système d'activation chimique selon la revendication 19, dans lequel l'entonnoir de substance sèche (SF) comprend un dispositif d'alimentation à vis (22).

22. Polymère liquide ou système d'activation chimique selon la revendication 21, dans lequel le dispositif d'alimentation à vis (22) est fixé à l'extension d'arbre (SE).

23. Polymère liquide ou système d'activation chimique selon la revendication 19, dans lequel le réacteur de mélange (10) est fixé à un compartiment (24) qui comprend un stator (25).

24. Polymère liquide ou système d'activation chimique selon la revendication 23, dans lequel le stator (25) comprend au moins une turbine à jet (26).

25. Polymère liquide ou système d'activation chimique selon la revendication 24, dans lequel l'au moins une turbine à jet (26) est reliée à l'extension d'arbre (SE).

26. Polymère liquide ou système d'activation chimique selon la revendication 1, dans lequel la pluralité d'anneaux (19) entourant l'actionneur submersible (15) sont fixés, via un ou plusieurs boulons (S), à la bride de base de la coupelle (17).
